Europäisches Patentamt

European Patent Office

Office européen des brevets

(19)

(11) Publication number: **0 397 634**
**A2**

(12) **EUROPEAN PATENT APPLICATION**

(21) Application number: 90850167.9

(22) Date of filing: 07.05.90

(51) Int. Cl.5: **G03B 21/132**

(30) Priority: **11.05.89 SE 8901699**

(43) Date of publication of application:
**14.11.90 Bulletin 90/46**

(84) Designated Contracting States:
**AT BE CH DE DK ES FR GB GR IT LI LU NL SE**

(71) Applicant: **INTERDIDACT AUDIVISUELLA AB**
**Lilla Mölleberga**
**S-212 90 Malmö(SE)**

(72) Inventor: **Stjernswärd, Sten**
**Lilla Mölleberga**
**S-212 90 Malmö(SE)**

(74) Representative: **Barnieske, Hans Wolfgang et**
**al**
**c/o H.W. Barnieske Patentbyrä AB P.O. Box**
**25 Turingegatan 26**
**S-151 21 Södertälje 1(SE)**

(54) **A masking device.**

(57) A masking frame for a selectable pair of opposite edge portions of a substantially quadratic objective window (1) in a projector such as an overhead projector comprises two masking strips (3, 4) which in operative position are parallel and arranged to cover one each of two opposite edge portions of the window, while leaving a surface area of the window (1) corresponding to a picture of conventional size, and means (5, 36) to shift the strips (3, 4) between the two pairs of opposite edge portions of the window.

Fig.1

EP 0 397 634 A2

## A masking device

The invention relates to a masking device, i.e. a device for partially screening off a substantially quadratic objective window in a projector, such as an overhead projector.

Overhead projectors generally have an objective window on which a transparent picture is placed, the image then being projected on a usually vertical screen by means of a source of light. The objective window is usually substantially quadratic in shape, its edge length substantially corresponding to the length of a standard sheet of material carrying the picture. Thus in Europe the edge of the objective window corresponds to the length of an A4 page.

However, a troublesome problem is that light passes beside the transparency, on each side of its longitudinal edges, and is projected onto the screen where it is irritating for the viewer.

The reason one dimension of the objective window is larger than the transparency is of course to enable projection of both horizontal and vertical pictures of A4 size the correct way up without having to cut them.

The object of the invention is to offer a solution to the above problem, i.e. to achieve a device which will permit masking of the opposite edge portions of the objective window which are not covered by the transparency with the picture, one dimension of this transparency being less than the edge length of the objective window and the other dimension substantially corresponding to the edge length of the objective window, the device being movable in relation to the objective window in order to permit the edges of either of the two opposite pairs of edges of the objective window to be screened off.

The object of the invention is achieved in a device for partially screening a substantially quadratic objective window in an overhead projector by means of two masking strips which in operative position are parallel, each being arranged to cover one each of two opposite edge portions of the window while leaving a surface area of the window corresponding to a picture of conventional size, and means to shift the strips between the two pairs of opposite edge portions of the window.

According to one embodiment of the invention each strip is pivotally journalled at one of two diagonally opposite corners of the objective window.

The means comprises members connecting the strips to common oscillating movements in opposite directions in the plane of the objective window between the operative positions of the strips. Alternatively the means may comprise attachment members which keep the strip parallel and beside each other in a common plane and at a predetermined distance from each other, and members for rotating the two parallel strips to shift them between the two positions indicated.

The device is preferably located beneath a transparent plate forming the surface to receive pictures in the objective window.

The strips may be fitted to such a plate, in which case the plate with strips and associated details may be sold as an accessory to existing projectors. The total thickness of the device and the plate is therefore kept as slight as possible.

However, the device according to the invention is primarily intended to be built into overhead projectors at the time of manufacture and should then be located beneath a transparent plate in the picture window of the projector. The strips may be located between two parallel transparent plates sealed as far as possible around the edges to prevent dirt, dust, etc from collecting in the path of the light source.

The rear end of the strips may be provided with operating arms extending away from the window area and being accessible for manual operation outside the periphery of the projector.

The invention is defined in the appended claims. Embodiments of the invention will be described by way of example in the following, with reference to the accompanying drawings.

Figure 1 shows schematically from above a first embodiment of the device according to the invention,

Figure 2 shows schematically from above a second embodiment of the device according to the invention, and

Figure 3 shows schematically a lateral view of the device according to the invention.

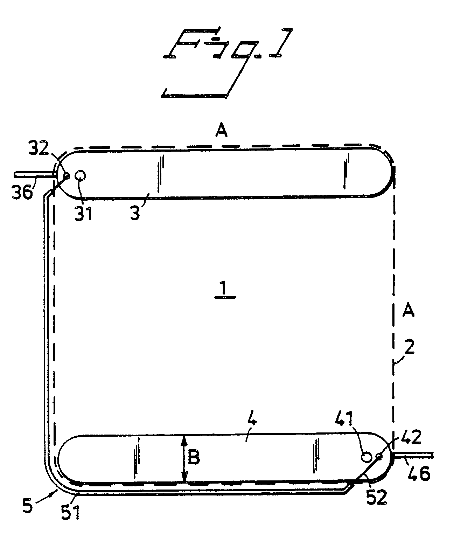

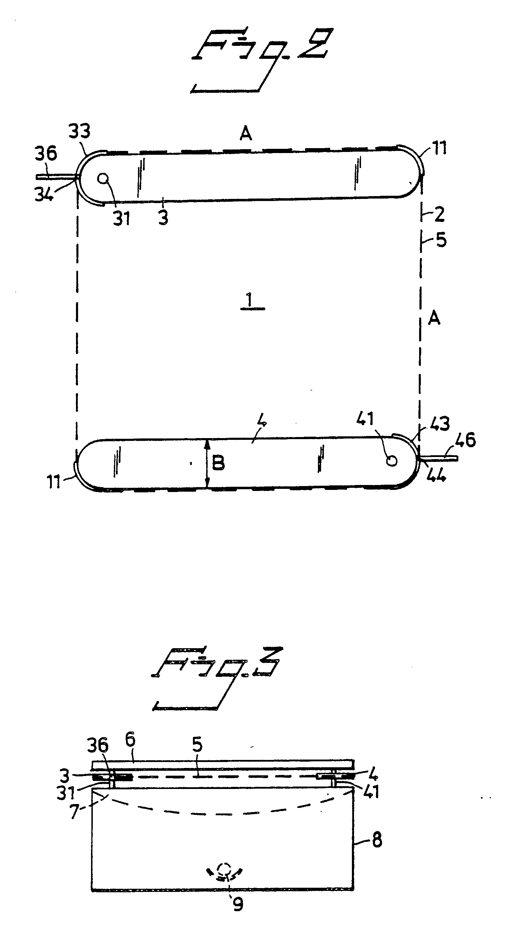

Figure 3 shows schematically the lower part of an overhead projector comprising a housing 8 containing a light source 9 and a condensing lens 7. Along two opposite edges of the projector window are two parallel strips 3, 4, pivotably journalled about respective shafts 31, 41 at diagonally opposite corners of the objective window. The two strips 3, 4 are connected together by 30 means of a connecting member 5 causing the strips 3, 4 to assume parallel alignment when one of the strips is placed along either of the edges of the window which meet in the area when this strip is journalled.

Referring now to Figure 1, it can be seen that operating levers 36, 46 are connected to the strips 3, 4 to permit simple and convenient manipulation of the strips to their two screening positions.

Figure 1 shows a substantially quadratic objective window in an overhead projector, not shown in further detail. The edge of the window is indicated by a broken line 2 and the length of the edges is designated A. Identical strips 3 and 4 are placed at the upper and lower edges of the window 1. The length of the strips 3, 4 corresponds to the edge length A. The strips 3, 4 are pivotably journalled to allow movement in the plane of the window 1 about respective pivots 31, 41 in two diagonally opposite corners of the window area. The corners of the window and the corners of the strips may have substantially the same radius of curvature, this corresponding to the distance of the pivots 31, 32 from the nearest edge of the window. Both strips 3, 4 have a width B. The edge length A of the window 1 suitably corresponds to the edge length of a standard format, such as A4.

The free distance between the strips 3, 4, i.e. the distance A - 2 x B suitably corresponds to the format width.

The strips 3, 4 are pivotable in the window's plane and can be set manually along either of the two edges of the window adjacent to the journalling of the strip, thus enabling the strips to be positioned so as to screen off either pair of opposite edge areas of the window 1. If necessary the edges of the strips 3, 4 may be bevelled to facilitate passage when they are to be swung past each other.

To facilitate operation of the strips they may be connected by a guide cable 5 (Bowden cable). The cable 5 comprises a sheath 51 secured at least at its ends, the wire 52 being anchored at points 32, 42 on each strip. The anchoring points are located on the centre line passing longitudinally through each pivot and the points 32, 42 are located at equal distances from each pivot 31, 41 and on the same side of respective pivots 31, 41.

The cable 5 is arranged so that its ends, i.e. the two ends of the cable sheath 51 and the ends of the wire 52 protruding therefrom, form an angle of approximately 45° to the edges of the window 1.

Thanks to the cable 5, rotating one strip from one window edge to the other about the pivot will cause the other strip to perform a corresponding movement about its pivot.

Figure 2 shows a device in which only the means for coupling the pivot movement of the strips differs from that according to Figure 1.

In the embodiment according to Figure 2 said means comprises a cord 5 extending peripherally about the contour 2 of the window 1.

In the embodiment according to Figure 2 two cord guides 11 are provided at the two diagonally opposite corners of the window area 1 without the pivots 31, 41 of the strips 3, 4. At the pivoted ends of the strips 3, 4 is a cord guide 33, 43, the centre of curvature of which coincides with respective pivots 31, 41. The cord 5 is secured to respective strip cord guides 43 on the longitudinal centre line of each strip.

If one of the strips is rotated about its pivot 41, the cord 5 will move peripherally, sliding on the cord guides 11 and around the strip cord guides 33, 43 and thereby causing the other strip to describe a corresponding rotary movement.

## Claims

1. A device for partially screening opposite edge portions of a preferably rectangular, especially quadratic objective window in a projector such as an overhead projector, said device consisting of two masking strips (3, 4) which in operative position are parallel and arranged to cover one each of two opposite edge portions of the window (1) while leaving a surface area of the window corresponding to a picture of conventional size, **wherein** each strip (3, 4) is pivotably journalled at one each of two diagonally opposite corners of the objective window (1) and that means (5) are arranged to shift the strips (3, 4) between the two pairs of opposite edge portions of the window (1).

2. A device as claimed in claim 1, **wherein** the means (5) comprises members (51, 52; 5, 11, 33, 43) connecting the strips (3, 4) to common oscillating movements in opposite directions in the plane of the objective window between the operative positions of the strips.

3. A device as claimed in claim 1 or 2, **wherein** the strips (3, 4) are located beneath a transparent plate (6) forming the surface to receive pictorial material in the objective window.

4. A device as claimed in any of claims 1 - 3, **comprising** at least one operating element (36; 46) connected to at least one strip and protruding out past the edge of the window.

5. A device as claimed in any of claims 1 - 4, **wherein** the edge length of the objective window corresponds to the length of a standard sheet size and that the width of the strips (3, 4) and the spacing between them define the width of the sheet size.

Fig.1

Fig. 2

Fig. 3